# FASCICULE DE BREVET EUROPEEN

(11) **EP 4 264 793 B1**
(45) Date de publication et mention de la délivrance du brevet: **12.08.2026**
(21) Numéro de dépôt: 21830626.4
(22) Date de dépôt: 03.12.2021
(51) Int. Cl.: H02K 1/276

(54) **ROTOR DE MACHINE ELECTRIQUE AVEC DEUX BARRIERES DE FLUX PAR POLE MAGNETIQUE**
ROTOR EINER ELEKTRISCHEN MASCHINE MIT ZWEI FLUSSSPERREN PRO MAGNETPOL
ELECTRIC-MACHINE ROTOR WITH TWO FLUX BARRIERS PER MAGNETIC POLE

(30) Priorité: 17.12.2020 FR 2013472
(43) Date de publication de la demande: 25.10.2023
(73) Titulaire: IFP Energies nouvelles, 92500 Rueil-Malmaison (FR)
(72) Inventeur: MONNIER, Gaetan, 92852 RUEIL-MALMAISON CEDEX (FR); CISSE, Koua Malick, 92852 RUEIL-MALMAISON CEDEX (FR); CHAREYRON, Baptiste, 92852 RUEIL-MALMAISON CEDEX (FR)
(74) Mandataire: IFP Energies nouvelles
(86) Numéro de dépôt international: PCT/EP2021/084223
(87) Numéro de publication internationale: WO 2022/128541

(56) Documents cités:
- EP-A2- 2 611 002
- US-A1- 2007 096 578
- US-A1- 2013 147 299
- US-A1- 2015 380 994
- US-A1- 2017 187 257
- US-A1- 2017 317 540
- US-B2- 7 902 710

## Description

### Domaine technique

La présente invention se rapporte à une machine électrique tournante synchro-réluctante (assistée d'aimants permanents), et concerne plus particulièrement l'architecture particulière d'un rotor d'une telle machine.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent des logements pour des aimants permanents et des perforations pour créer des barrières de flux permettant de diriger radialement le flux magnétique des aimants vers le stator et pour favoriser la création d'un couple réluctant, et d'alléger ce rotor pour diminuer les efforts centrifuges que l'empilage de tôle doit supporter
Ce rotor est généralement logé à l'intérieur d'un stator qui porte des bobinages électriques configuré pour générer un champ magnétique tournant permettant d'entraîner en rotation le rotor.

### Technique antérieure

Comme cela est mieux décrit notamment dans la demande de brevet WO2020/020580, le rotor d'une machine synchro-réluctante comprend une pluralité d'évidements axiaux qui traversent les tôles de part en part.

Pour la conception du rotor décrite dans cette demande de brevet, une première série d'évidements axiaux, disposés radialement les uns au-dessus des autres et à distance les uns des autres, forment des logements pour des générateurs de flux magnétiques, ici des aimants permanents sous forme de barreau rectangulaire.

L'autre série d'évidements consiste en des perforations de direction radiale inclinée, qui partent de ces logements pour arriver au voisinage du bord des tôles, au voisinage de l'entrefer.

Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants permanents ne peut alors que transiter par les parties pleines entre les perforations. Ces parties pleines sont constituées d'un matériau ferromagnétique.

Les demandes de brevet US 2018145552 et US 2020259377 décrivent des machines électriques, avec, pour chaque pôle magnétique, deux barrières de flux : la barrière de flux interne comporte deux évidements et quatre aimants permanents, et la barrière de flux externe comporte deux évidements et deux aimants permanents. Dans ces demandes de brevet, les évidements des barrières de flux sont continus (c'est-à-dire sans pont magnétique entre les évidements), ce qui génère des contraintes mécaniques dans les tôles du rotor. De plus, ces machines électriques nécessitent d'avoir six aimants permanents par pôle, ce qui est onéreux. La demande de brevet JP2000316241 décrit des machines électriques, avec, pour chaque pôle magnétique, deux barrières de flux agencées en forme de U..

La demande de brevet CN 208241428 décrit des machines électriques, avec, pour chaque pôle magnétique, deux barrières de flux, la barrière de flux interne en forme de U et la barrière de flux externe en forme de V. Dans cette demande de brevet, les évidements des barrières de flux sont continus (c'est-à-dire sans pont magnétique entre les évidements), ce qui génère des contraintes mécaniques dans les tôles du rotor et limite le fonctionnement à haute vitesse. La demande de brevet US 7,902,710 décrit des machines électriques, avec, pour chaque pôle magnétique, deux barrières de flux, la barrière interne en forme de U et la barrière de flux externe en forme de V. Dans cette demande de brevet, les barrières de flux externes débouchent sur la périphérie du rotor. De plus, les barrières de flux internes ne sont pas symétriques, car certains évidements débouchent sur la périphérie du rotor. En raison des évidements qui débouchent sur la périphérie du rotor, des contraintes mécaniques importantes sont appliquées dans les tôles du corps du rotor. En outre, la périphérie du rotor n'étant pas régulière, cela implique des pertes aérodynamiques.

Les documents US 2017/317540 A1, US 2007/096578 A1 et US 2015/380994 A1 décrivent des machines électriques, avec, pour chaque pôle magnétique, deux barrières de flux.

### Résumé de l'invention

L'invention a pour but de former une machine électrique avec de bonnes performances, en termes de couple et de puissance, tout en limitant les contraintes mécaniques, notamment pour couvrir des applications de la machine électrique sur de grandes plages de vitesse de rotation, y compris à haute vitesse (par exemple 20 000 ou 30 000 tr/min). Pour cela, l'invention concerne un rotor de machine électrique qui comprend un corps de rotor au sein duquel sont formées des barrières de flux, avec une barrière de flux externe et une barrière de flux interne. La barrière de flux interne a sensiblement la forme d'un U, et la barrière de flux externe a sensiblement la forme d'un V, chaque barrière de flux comprenant au moins un pont magnétique radial et un pont magnétique tangentiel. Cette constitution des barrières de flux permet de bonnes performances en termes de couple et de puissance, tout en limitant les contraintes mécaniques.

L'invention concerne un rotor pour machine électrique, selon la revendication 1.

Selon un mode de réalisation, pour chaque pôle magnétique, un aimant permanent, de préférence un unique aimant permanent, est positionné dans ledit évidement central de ladite barrière de flux interne.

Conformément à une mise en œuvre, pour chaque pôle magnétique, un aimant permanent, de préférence un unique aimant permanent, est positionné dans chaque évidement incliné de ladite barrière de flux interne.

Selon une caractéristique, pour chaque pôle magnétique, lesdits évidements inclinés desdites barrières de flux interne et/ou externe sont symétriques par rapport audit rayon perpendiculaire audit évidement central de ladite barrière de flux interne.

Avantageusement, deux pôles magnétiques consécutifs sont asymétriques.

De manière avantageuse, l'angle d'ouverture des évidements inclinés de ladite barrière de flux est aigu.

Selon un aspect, l'angle d'ouverture des évidements inclinés de ladite barrière de flux externe est obtus ou droit.

Selon une mise en œuvre, chaque pôle magnétique comporte une pluralité d'aimants permanents disposés dans lesdits évidements desdites barrières de flux, lesdits aimants permanents étant de dimensions identiques.

Selon un mode de réalisation ledit rotor comporte un évidement d'allègement entre ladite barrière de flux externe et la périphérie dudit corps de rotor, de préférence ledit évidement d'allègement a une forme sensiblement triangulaire, de manière préférée deux côtés de ladite forme triangulaire sont sensiblement parallèles auxdits évidements inclinés de ladite barrière de flux externe.

Avantageusement, ledit nombre de paires de pôles magnétiques est compris entre 2 et 9, de préférence entre 3 et 6, et vaut de manière préférée 4.

De manière avantageuse, ledit au moins un aimant permanent a une section rectangulaire. En outre l'invention concerne une machine électrique qui comprend un stator et un rotor selon l'une des caractéristiques précédentes, ledit rotor étant logé à l'intérieur dudit stator.

Selon un mode de réalisation, ledit stator comprend une pluralité d'encoches radiales disposées circonférentiellement le long dudit stator.

Conformément à une mise en œuvre, ladite machine électrique est du type machine électrique synchro-réluctante assistée d'aimants permanents.

D'autres caractéristiques et avantages du dispositif et du procédé selon l'invention, apparaîtront à la lecture de la description ci-après d'exemples non limitatifs de réalisations, en se référant aux figures annexées et décrites ci-après.

### Liste des figures

La figure 1 illustre une tôle d'un rotor selon un mode de réalisation de l'invention.
La figure 2 illustre le paramétrage géométrique du rotor selon le mode de réalisation de la figure 1.
La figure 3 illustre un rotor selon un premier mode de réalisation de l'invention.
La figure 4 illustre un rotor selon un deuxième mode de réalisation de l'invention.
La figure 5 illustre un rotor selon un troisième mode de réalisation de l'invention.
La figure 6 illustre un rotor selon un quatrième mode de réalisation de l'invention.
La figure 7 illustre un rotor selon un cinquième mode de réalisation de l'invention.
La figure 8 illustre un rotor selon un sixième mode de réalisation de l'invention.
La figure 9 illustre un paramétrage angulaire du rotor selon le mode de réalisation de la figure 1.

### Description des modes de réalisation

La présente invention concerne un rotor pour une machine électrique, notamment une machine électrique du type synchro-réluctante assistée d'aimants permanents. En outre, la présente invention concerne une machine électrique comprenant un rotor selon l'invention et un stator, le rotor étant disposé au sein du stator coaxialement à celui-ci.

Selon l'invention, le rotor pour machine électrique comporte :
- Un corps de rotor formé par un empilage de tôles, de préférence le corps de rotor peut être placé sur un arbre de rotor,
- Une pluralité de paires de pôles magnétiques, chaque pôle magnétique est composé de :
   ∘ deux barrières de flux (uniquement deux barrières de flux) : une barrière de flux externe, qui est plus proche de la périphérie du rotor, et une barrière de flux interne, qui est plus proche du centre du rotor, les barrières de flux sont formées par une pluralité d'évidements axiaux (la direction axiale étant la direction axiale du rotor),
   ∘ au moins un aimant permanent positionné dans un des évidements axiaux dudit corps du rotor.

Ledit au moins un aimant permanent permet de générer un flux magnétique, permettant la rotation du rotor par la création d'un champ magnétique tournant pouvant être généré par le stator. Les barrières de flux permettent de guider le champ magnétique généré par le rotor et par l'au moins un aimant permanent vers l'entrefer (l'entrefer étant l'espace formé entre la périphérie du rotor et le stator), de manière à limiter les fuites de flux magnétiques et augmenter les performances (notamment couple et puissance) de la machine électrique. Une paire de pôles magnétiques comprend deux pôles magnétiques de polarité opposée.

Selon l'invention, pour chaque pôle magnétique, la barrière de flux interne est constituée de trois évidements : deux évidements inclinés (latéraux) positionnés et espacés de part et d'autre d'un évidement central, qui est perpendiculaire à un rayon du rotor. Les évidements de la barrière de flux interne forment sensiblement un U (selon une section transversale à l'axe du rotor, qui correspond au plan d'une tôle constituant le corps de rotor), le fond du U étant formé par l'évidement central, et les segments opposés du U étant formés par les évidements inclinés. De plus, les deux évidements inclinés sont espacés de la périphérie du rotor. Autrement dit, il existe un pont magnétique (un pont de matière) entre les évidements inclinés et l'évidement central, et il existe un pont magnétique (un pont de matière) entre les évidements inclinés et la périphérie du rotor. Ces espacements obtenus par ces ponts magnétiques, permettent une bonne tenue mécanique du corps du rotor, tout en conservant de bonnes propriétés magnétiques du corps du rotor. En effet, les ponts magnétiques tangentiels (entre les évidements inclinés et la périphérie du rotor) permettent de créer une saturation locale et ainsi permettent au flux magnétique créé par l'au moins un aimant permanent d'être dirigé vers l'entrefer de la machine électrique, et les ponts magnétiques radiaux (entre les évidements inclinés et l'évidement central) permettent d'améliorer la tenue mécanique de la machine électrique à haute vitesse (par exemple 20000, 30000tr/min). Cet avantage peut également être mis à contribution pour les applications basse vitesse (par exemple 10000 tr/min) pour optimiser les ponts et maximiser la densité de couple. Les évidements sont inclinés par rapport au rayon perpendiculaire à l'évidement central. En d'autres termes, chaque évidement incliné est orienté de manière à former un angle par rapport au rayon perpendiculaire à l'évidement central, cet angle étant non nul et étant non droit (en d'autres termes, les évidements inclinés ne sont ni parallèles ni perpendiculaires au rayon perpendiculaire à l'évidement central).

De plus, pour chaque pôle magnétique, la barrière de flux externe est constituée de deux évidements : deux évidements espacés et inclinés (latéraux) par rapport au rayon perpendiculaire à l'évidement central de la barrière de flux interne du pôle magnétique. Les évidements de la barrière de flux externe forment sensiblement un V (selon une section transversale à l'axe du rotor, qui correspond au plan d'une tôle constituant le corps du rotor), chaque évidement incliné formant un segment du V. De plus, les deux évidements inclinés sont espacés de la périphérie du rotor. Autrement dit, il existe un pont magnétique (un pont de matière) entre les évidements inclinés, et il existe un pont magnétique (un pont de matière) entre les évidements inclinés et la périphérie du rotor. Cet espacement obtenu par ce pont de matière permet une bonne tenue mécanique du corps du rotor, tout en conservant de bonnes propriétés magnétiques du corps du rotor. En effet, les ponts magnétiques tangentiels (entre les évidements inclinés et la périphérie du rotor) permettent de créer une saturation locale et ainsi permettent au flux magnétique créé par l'au moins un aimant permanent d'être dirigé vers l'entrefer, et les ponts magnétiques radiaux (entre les évidements inclinés) permettent d'améliorer la tenue mécanique de la machine électrique à haute vitesse (par exemple 20000, 30000 tr/min). Cet avantage peut également être mis à contribution pour les applications basse vitesse (par exemple 10000 tr/min) pour optimiser les ponts et maximiser la densité de couple. L'angle formé par chaque évidement incliné par rapport au rayon perpendiculaire à l'évidement central est non nul et non droit (en d'autres termes, les évidements inclinés ne sont ni parallèles ni perpendiculaires au rayon perpendiculaire à l'évidement central).

Selon un mode de réalisation de l'invention, l'évidement central de la barrière de flux interne peut avoir (dans le plan transversal du rotor) sensiblement une longueur identique à la longueur des évidements latéraux de la barrière de flux interne. En d'autres termes, la longueur de l'évidement central de la barrière de flux interne peut avoir une longueur comprise entre 75 et 125 % de la longueur des évidements latéraux de la barrière de flux interne.

Les tôles peuvent être réalisées en matériau ferromagnétique de manière à guider le flux magnétique des aimants permanents et du stator. Les évidements des barrières de flux peuvent être obtenus par des perforations dans les tôles empilées formant le corps de rotor, et les ponts magnétiques sont formés par la tôle elle-même.

Conformément à une mise en œuvre de l'invention, l'au moins un aimant permanent peut avoir une forme parallélépipédique rectangulaire, dont une dimension est parallèle à l'axe du rotor. En particulier, dans une section transversale à l'axe du rotor, l'au moins un aimant permanent peut avoir une forme de rectangle. De préférence, tous les aimants permanents peuvent avoir une forme parallélépipédique rectangulaire.

Alternativement, l'au moins un aimant permanent peut avoir d'autres formes, en particulier une forme de parallélogramme dans une section transversale à l'axe du rotor, par exemple, sensiblement une forme de trapèze.

Selon une autre alternative, pour laquelle les aimants permanents peuvent être des plasto aimants (aimants souples), l'aimant permanent peut avoir une forme de parallélogramme dans une section transversale, ou une forme courbe. On peut citer notamment le matériau plasto-ferrite, qui est composé de poudre de ferrite mélangée à un liant thermoplastique. Ce composé associe les propriétés magnétiques de la ferrite aux propriétés mécaniques du thermoplastique.

Les évidements peuvent de préférence avoir une forme compatible avec la forme de l'au moins un aimant permanent. Par exemple, l'évidement peut avoir sensiblement une forme de parallélogramme (selon une section transversale), par exemple de trapèze ou de rectangle, ou courbe (en particulier dans le cas de plasto-aimant). Les évidements peuvent en outre comprendre des formes supplémentaires à au moins une, de préférence aux deux, extrémités de l'évidement considéré dans la section transversale du rotor. Ces formes supplémentaires peuvent être circulaires, rectangulaires, ovales, courbes, en forme de L, ou autre. Ces formes supplémentaires des évidements permettent, lorsqu'un aimant permanent est prévu dans l'évidement, de limiter les pertes de flux magnétiques et de canaliser le flux magnétique vers l'entrefer de la machine électrique et de limiter la contrainte mécanique dans les ponts magnétiques. Ces formes supplémentaires peuvent être remplis de matériau tel que la résine, afin d'assurer notamment la tenue des aimants permanents. Pour le mode de réalisation, pour lequel l'aimant est sous la forme d'un plasto-aimant, les évidements peuvent de préférence ne pas comprendre des formes supplémentaires aux extrémités.

Selon un mode de réalisation de l'invention, pour chaque pôle magnétique, un aimant permanent, peut être positionné dans l'évidement central de la barrière de flux interne. De préférence, un unique aimant permanent peut être positionné dans l'évidement central. Ainsi, le nombre d'aimant permanent par évidement est limité, ce qui facilite les opérations de fabrication de la machine électrique, et ce qui évite les contraintes de fabrication des aimants permanents.

Alternativement ou cumulativement, pour chaque pôle magnétique, un aimant permanent, peut être positionné dans chaque évidement latéral de la barrière de flux interne. De préférence, un unique aimant permanent peut être positionné dans chaque évidement latéral de la barrière de flux interne. Ainsi, le nombre d'aimant permanent par évidement est limité, ce qui facilite les opérations de fabrication de la machine électrique, et ce qui évite les contraintes de fabrication des aimants permanents.

Alternativement ou cumulativement à une des deux réalisations précédentes, pour chaque pôle magnétique, un aimant permanent peut être positionné dans chaque évidement latéral de la barrière de flux externe. De préférence, un unique aimant permanent peut être positionné dans chaque évidement latéral de la barrière de flux externe. Ainsi, le nombre d'aimant permanent par évidement est limité, ce qui facilite les opérations de fabrication de la machine électrique, et ce qui évite les contraintes de fabrication des aimants permanents.

Conformément à une mise en œuvre préférée de l'invention, chaque pôle magnétique peut comprendre cinq aimants permanents positionnés dans les cinq évidements : dans les trois évidements de la barrière de flux interne, et dans les deux évidements de la barrière de flux externe. Cette mise en œuvre permet d'améliorer la densité de couple et la densité de puissance. Avoir 5 aimants permet aussi d'avoir un rotor de petit diamètre et à fort nombre de paires de pôles, car il y a moins d'aimant à agencer au sein de chaque pôle magnétique, en respectant les contraintes industrielles sur les dimensions des aimants permanents.

En variante, seuls les évidements latéraux des barrières de flux interne et externe peuvent être pourvus d'aimants permanents.

Lorsque chaque pôle magnétique comporte une pluralité d'aimants permanents, les aimants permanents peuvent avoir des dimensions identiques. Cette solution permet de garantir de bonnes performances de la machine électrique tout en minimisant le coût de fabrication. Cette conception est particulièrement avantageuse lorsque chaque pôle magnétique comporte cinq aimants permanents.

En variante, les dimensions des aimants permanents peuvent être différentes.

Selon un aspect de l'invention, pour chaque pôle magnétique, les évidements latéraux des barrières de flux interne et/ou externe peuvent être symétriques par rapport au rayon perpendiculaire à l'évidement central de la barrière de flux interne. De préférence, la symétrie peut exister pour les deux barrières de flux interne et externe. Lorsque la barrière de flux externe est symétrique, le pont magnétique situé entre les évidements inclinés est radial, et appartient au rayon perpendiculaire à l'évidement central de la barrière de flux interne. Cette symétrie permet une optimisation des performances mécaniques de la machine électrique.

Avantageusement, l'évidement central de la barrière de flux interne peut également être symétrique du rayon qui lui est perpendiculaire.

Conformément à une mise en œuvre de l'invention, tous les pôles magnétiques du rotor peuvent être identiques.

En variante, les pôles magnétiques du rotor consécutifs peuvent être différents : deux pôles magnétiques du rotor consécutifs sont alors asymétriques. Cette asymétrie peut être formée par des angles d'inclinaison différents des évidements inclinés des barrières de flux interne et externe. Pour cette mise en œuvre, si le rotor comporte p paires de pôles magnétiques, il comprend p pôles magnétiques primaires identiques, et p pôles magnétiques secondaires identiques entre eux, mais différents des pôles magnétiques primaires, et les pôles magnétiques secondaires étant intercalés entre les pôles magnétiques primaires. Cette conception asymétrique permet de réduire les ondulations de couples, les harmoniques de force contre-électromotrice et le bruit acoustique.

Pour ce mode de réalisation, on peut définir des relations entre les angles des pôles magnétiques. Si on note p le nombre de paires de pôles du rotor, l'angle moyen d'un pôle magnétique (qui serait l'angle des pôles magnétiques d'un rotor sans asymétrie) peut être noté : $γ = \frac{π}{p} .$

On peut alors écrire, l'angle des pôles magnétiques primaires *yp1* par une équation de la forme : *γp*1 *= k* × *γ* avec k une constante d'asymétrie. Selon une mise en œuvre de l'invention, k peut être compris entre 0,9 et 1 (borne inférieure incluse), et de manière préférée entre 0,91 et 0,95 (bornes incluses). Ces gammes de valeur permettent une bonne réduction des ondulations de couple.

L'angle des pôles magnétiques secondaires *yp2* peut alors se déduire par l'équation : *yp2 = 2y - yp1.*

On peut définir un angle d'inclinaison des évidements inclinés qui correspond à l'angle entre une droite passant par le centre C du rotor et par un point milieu positionné au niveau d'une face externe de l'évidement incliné de la barrière de flux considérée et le rayon perpendiculaire à l'évidement central de la barrière de flux interne. On parle d'angle d'inclinaison interne pour l'angle d'inclinaison des évidements inclinés de la barrière de flux interne, et d'angle d'inclinaison externe pour l'angle d'inclinaison des évidements inclinés de la barrière de flux externe.

Selon un mode de réalisation, l'angle d'inclinaison interne du pôle magnétique primaire δ1p1 peut être défini par la relation : *δ*1*p*1 = *k*_{1*p*1} × *γp*1, avec *k*_{1*p*1} une constante, avec *k*_{1*p*1} pouvant être compris entre 0,5 et 0,9 (bornes incluses), de préférence entre 0,7 et 0,9 (bornes incluses).

De plus, l'angle d'inclinaison externe du pôle magnétique primaire δ2p1 peut être défini par la relation : *δ*2*p*1 = *k*_{2*p*1} × *δ*1*p*1 avec *k*_{2*p*1} une constante, avec *k*_{2*p*1} pouvant être compris entre 0,4 et 0,9 (bornes incluses), de préférence entre 0,5 et 0,65 (bornes incluses).

Selon un mode de réalisation, l'angle d'inclinaison interne du pôle magnétique secondaire δ1p2 peut être défini par la relation : *δ*1*p*2 = *k*_{1*p*2} × yp2, avec *k*_{1*p*2} une constante, avec *k*_{1*p*2} pouvant être compris entre 0,5 et 0,9 (bornes incluses), de préférence entre 0,7 et 0,9 (bornes incluses).

De plus, l'angle d'inclinaison externe du pôle magnétique primaire δ2p2 peut être défini par la relation : *δ*2*p*2 = *k*_{2*p*2} × *δ*1*p*2 avec *k*_{2*p*2} une constante, avec *k*_{2*p*2} pouvant être compris entre 0,4 et 0,9 (bornes incluses), de préférence entre 0,5 et 0,7 (bornes incluses).

Ces plages angulaires permettent une optimisation de l'agencement des aimants, générant des ondulations de couple réduites tout en maximisant le couple et la puissance de la machine à haute vitesse.

On définit l'angle d'ouverture des évidements inclinés de la barrière de flux interne ou externe par l'angle formé entre deux droites, chaque droite passant par le milieu de deux côtés d'un évidement incliné (sans prendre en compte d'éventuelles formes supplémentaires aux extrémités de l'évidement), les deux côtés de l'évidement incliné étant celui faisant face à la périphérie du rotor et celui faisant face au centre du rotor. Ces deux côtés correspondent aux côtés de plus petite dimension des évidements. Pour le mode de réalisation, pour lequel les évidements ont sensiblement une forme rectangulaire (à l'exception des éventuelles formes supplémentaires) dans le plan transversal du rotor, les deux côtés correspondent à l'épaisseur des évidements. En d'autres termes, l'angle d'ouverture de la barrière de flux externe correspond à l'angle formé par les segments du V, et l'angle d'ouverture de la barrière de flux interne correspond à l'angle formé par les segments opposés du U.

Selon une option de réalisation, l'angle d'ouverture des évidements inclinés de la barrière de flux interne peut être strictement inférieur à l'angle d'ouverture des évidements inclinés de la barrière de flux externe.

Selon un mode de réalisation, l'angle d'ouverture des évidements inclinés de la barrière de flux interne peut être aigu, c'est-à-dire inférieur à 90°. Un tel angle permet d'augmenter la taille des évidements latéraux, et le cas échant la taille des éventuels aimants permanents latéraux, ce qui permet de maximiser le couple de la machine électrique.

Selon un mode de réalisation, l'angle d'ouverture des évidements inclinés de la barrière de flux externe peut être obtus ou droit, c'est-à-dire supérieur ou égal à 90°. Un tel angle permet d'augmenter la taille des évidements latéraux, et le cas échant la taille des éventuels aimants permanents latéraux, ce qui permet de maximiser le couple de la machine électrique.

On peut définir un rayon interne pour désigner le rayon de la barrière de flux interne, le rayon interne étant la distance entre le centre du rotor et le côté de l'évidement central de la barrière de flux interne faisant face au centre du rotor, ce rayon interne étant défini sur le rayon perpendiculaire à l'évidement central de barrière de flux interne.

Selon un mode de réalisation de l'invention, le ratio entre le rayon interne et le rayon du rotor peut être compris entre 0,3 et 0,8 (bornes incluses) et de préférence entre 0,55 et 0,7 (bornes incluses) pour optimiser le couple et la puissance de la machine électrique.

On peut définir un rayon externe pour désigner le rayon de la barrière de flux externe, le rayon externe étant la distance entre le centre du rotor et une projection du point le plus proche du centre du rotor d'un évidement incliné de la barrière de flux externe sur le rayon perpendiculaire à l'évidement central de la barrière de flux interne.

Selon un mode de réalisation de l'invention, on peut définir une relation entre le rayon interne rᵢₙₜ, le rayon du rotor r et le rayon externe rₑₓₜ : ${r}_{ext} = {r}_{int} + {k}_{r} \left(r-{r}_{int}\right)$

Avec kr étant un coefficient. kr peut être compris entre 0,2 et 0,8 (bornes incluses), de préférence entre 0,35 et 0,55 (bornes incluses) pour optimiser les performances magnétiques de la machine électrique.

Conformément à une mise en œuvre de l'invention, le rotor peut comprendre des évidements d'allègement agencés entre la barrière de flux externe et la périphérie du rotor. Autrement dit, chaque pôle magnétique peut comprendre un évidement d'allègement entre la barrière de flux externe et la périphérie du rotor. Ces évidements d'allègement ne sont pas destinés à recevoir des aimants permanents. Ils permettent d'alléger la masse du rotor et de réduire les contraintes mécaniques du corps du rotor à haute vitesse, et de maximiser la densité de performances du rotor.

De manière avantageuse, l'évidement d'allègement peut avoir sensiblement une forme triangulaire. De manière préférée, deux côtés de la forme triangulaire peuvent être parallèles aux évidements inclinés de la barrière de flux externe. Ainsi, l'espacement entre l'évidement d'allègement et les évidements inclinés est quasiment constant, ce qui permet une bonne tenue mécanique du corps du rotor sans pertes de performances électromagnétiques. De plus, un sommet du triangle peut être agencé sur le rayon perpendiculaire à l'évidement central de la barrière de flux interne, et le rayon perpendiculaire à l'évidement central de la barrière de flux interne peut optionnellement être un axe de symétrie du triangle. En outre, le troisième côté peut faire face à la périphérie du rotor, en étant parallèle à la tangente de la périphérie du rotor au niveau de l'intersection avec le rayon perpendiculaire à l'évidement central de la barrière de flux interne.

Alternativement, l'évidement d'allègement peut avoir d'autres formes, telles que circulaire, rectangulaire, une forme de portion de disque par exemple avec la face proche de la périphérie du rotor pouvant être un arc de cercle de rayon identique ou différent du rayon de la périphérie du rotor, etc.

Selon l'invention, le rotor comprend p paires de pôles magnétiques (ou 2xp pôles magnétiques). Avantageusement, p peut être compris entre 2 et 9, et de préférence p est compris entre 3 et 6, et vaut de manière préférée 4.

L'invention concerne également une machine électrique, qui comporte un stator et un rotor selon l'une quelconque des variantes ou des combinaisons de variantes telles que décrites ci-dessus. Le rotor est agencé à l'intérieur du stator. Classiquement, le stator comprend des bobinages pour générer un champ magnétique tournant apte à faire tourner le rotor par rapport au stator. Les bobines peuvent être insérées dans des encoches axiales du stator, les encoches étant disposées circonférentiellement au sein du stator.

Selon un mode de réalisation, la machine électrique est une machine synchro-réluctante assistée d'aimants permanents.

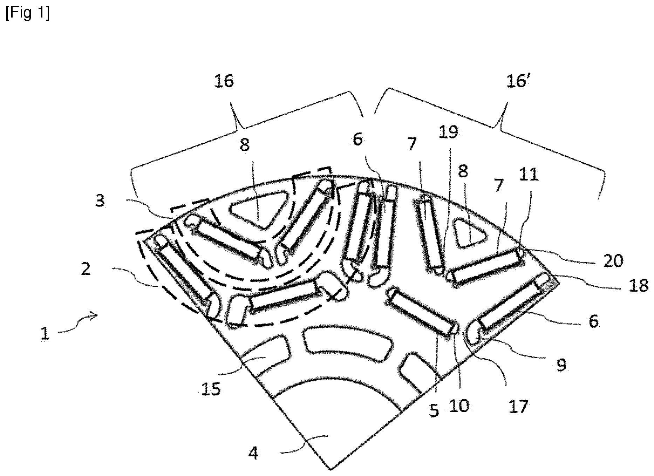

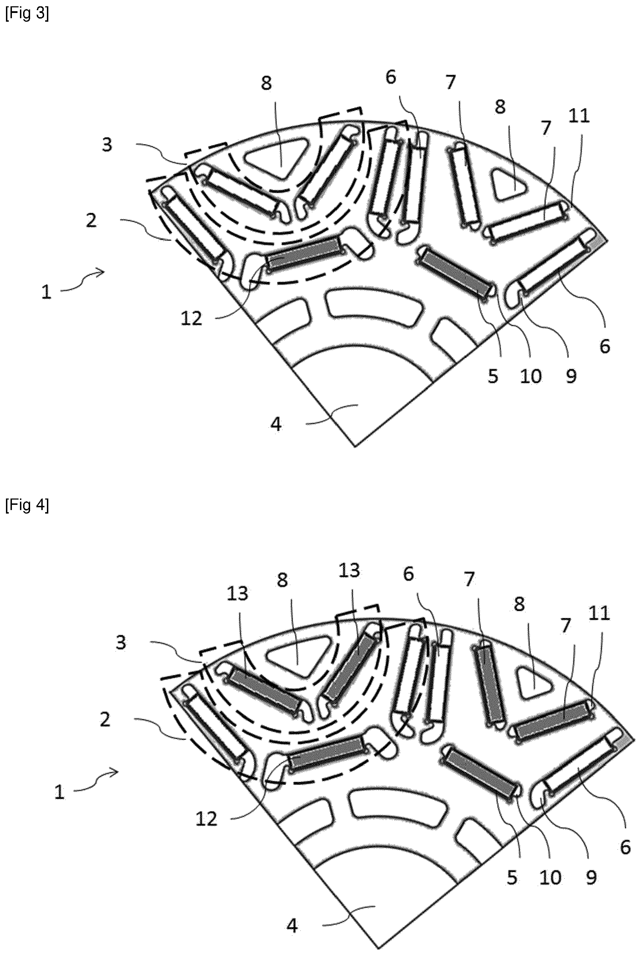

La figure 1 illustre, schématiquement et de manière non limitative, un rotor de machine électrique selon un mode de réalisation de l'invention. La figure 1 est une vue d'une section transversale perpendiculaire à l'axe du rotor. De plus, la figure 1 est une vue partielle du rotor : la figure 1 représente un quart du rotor correspondant à deux pôles magnétiques d'un rotor à quatre paires de pôles magnétiques, les autres paires de pôles magnétiques se déduisent par répétition circulaire de la vue partielle. Sur cette figure 1, aucun aimant permanent n'est représenté, les différents modes de réalisation d'agencement des aimants permanents sont illustrés et détaillés aux figures 3 à 8. Le rotor 1 est formé d'un empilement de tôles, lié à un arbre de rotor 4. La portion de rotor 1 illustrée comprend deux pôles magnétiques 16, 16'. Chaque pôle magnétique 16, 16' comprend deux barrières de flux : une barrière de flux interne 2 et une barrière de flux externe 3. La barrière de flux interne 2 comprend un évidement central 5, et deux évidements inclinés 6 de part et d'autre de l'évidement central 5, ces trois évidements 5, 6 forment une barrière de flux ayant sensiblement une forme de U. Un pont magnétique radial 17 est prévu entre l'évidement central 5 et chaque évidement incliné 6. Un pont tangentiel 18 est prévu entre chaque évidement incliné 6 et la périphérie du rotor 1. La barrière de flux externe 3 comprend deux évidements inclinés 7, ces deux évidements 7 forment une barrière de flux ayant sensiblement une forme de V. Un point magnétique radial 19 est prévu entre les évidements inclinés 7. Un pont tangentiel 20 est prévu entre chaque évidement incliné 7 et la périphérie du rotor 1.

De plus, le rotor comporte un évidement d'allègement 8, ayant sensiblement une forme triangulaire et disposé entre la barrière de flux externe 3 et la périphérie du rotor 1. L'évidement d'allègement 8 a deux côtés parallèles aux évidements latéraux 7 de la barrière de flux externe 3, le troisième côté fait face à la périphérie du rotor 1. Le rotor peut comprendre d'autres évidements d'allègements, tels que les évidements d'allègement 15 prévus entre l'arbre du rotor 4 et la barrière de flux interne 2.

Pour le mode de réalisation de la figure 1, chaque évidement 5, 6 ou 7 des barrières de flux interne et externe, a sensiblement une forme rectangulaire et comprend deux formes supplémentaires à ses extrémités. Il s'agit des formes supplémentaires 10 pour l'évidement central 5, des formes supplémentaires 9 pour les évidements inclinés 6, et des formes supplémentaires 11 pour les évidements inclinés 7. Ces formes supplémentaires 9, 10, 11 sont en forme de L, de rectangle arrondi et en forme de portion de disque.

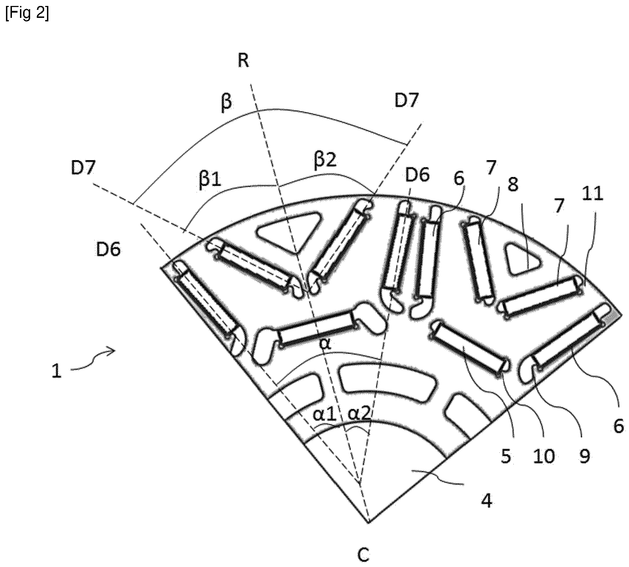

La figure 2 est identique à la figure 1, et permet de définir un paramétrage géométrique des barrières de flux. Le centre du rotor est noté C. On trace le rayon R, qui est perpendiculaire à l'évidement central 5. Pour le mode de réalisation des figures 1 et 2, le rayon R est un axe de symétrie de l'évidement central 5. De plus, sur cette figure on trace les droites D6 et D7. Les droites D6 passent par les milieux de deux côtés opposés des évidements inclinés 6 (sans compter les formes supplémentaires 9). Les droites D7 passent par les milieux de deux côtés opposés des évidements inclinés 7 (sans compter les formes supplémentaires 11). L'angle d'ouverture des évidements inclinés 6 de la barrière de flux interne est noté α, il est défini par l'angle formé par les deux droites D6, cet angle α est un angle aigu. L'angle d'ouverture des évidements inclinés 7 de la barrière de flux externe est noté β, il est défini par l'angle formé par les deux droites D7, cet angle β est un angle obtus. De plus, on a la relation suivante : α<β.

Pour le mode de réalisation illustré, le pôle magnétique est symétrique par rapport au rayon R . Dans ce cas, l'angle α est formé d'un premier angle d'inclinaison α1 et d'un deuxième angle d'inclinaison α2. Chacun des angles α1 et α2 est défini entre une droite D6 et le rayon R, avec α1 = α2 (ce qui implique que les évidements inclinés 6 sont symétriques). De plus, l'angle β est formé d'un premier angle d'inclinaison β1 et d'un deuxième angle d'inclinaison β2. Chacun des angles β1 et β2 est défini entre une droite D7 et le rayon R, avec β1 = β2 (ce qui implique que les évidements inclinés 7 sont symétriques).

De plus, pour le mode de réalisation de figures 1 et 2, les deux pôles magnétiques 16 et 16' sont différents : les angles des évidements inclinés des barrières de flux du pôle magnétique 16 sont supérieurs aux angles des évidements inclinés des barrières de flux du pôle magnétique 16'. De plus, les formes supplémentaires 10, 11 sont différentes entre les pôles magnétiques 16 et 16'.

En outre, pour ce mode de réalisation, le rayon R est un axe de symétrie de l'évidement d'allègement 8.

En variante, tous les pôles magnétiques du rotor 1 peuvent être identiques.

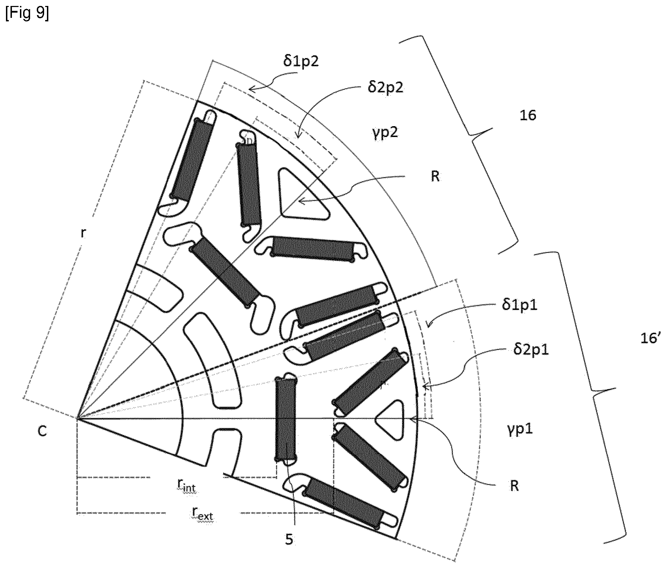

La figure 9 est identique à la figure 1, et permet de définir un paramétrage angulaire des barrières de flux. Le centre du rotor est noté C. On trace le rayon R, qui est perpendiculaire à l'évidement central 5. Sur cette figure, on représente un pôle magnétique primaire 16' et un pôle magnétique secondaire 16. L'angle du pôle magnétique primaire 16' est noté γp1, et l'angle du pôle magnétique secondaire 16 est noté yp2. Ces deux angles sont différents. De plus, l'angle d'inclinaison interne du pôle magnétique primaire 16' est noté δ1p1 et l'angle d'inclinaison externe du pôle magnétique primaire 16' est noté δ2p1. En outre, l'angle d'inclinaison interne du pôle magnétique secondaire 16 est noté δ1p2 et l'angle d'inclinaison externe du pôle magnétique secondaire 16 est noté δ2p2. Ces angles sont différents, et on a les relations suivantes δ1p1< δ1p2, δ2p1< δ2p2, δ2p1< δ1p1 et δ2p2< δ1p2.

En outre, on représente sur la figure 9, le rayon du rotor r, ainsi que le rayon interne rᵢₙₜ de la barrière de flux interne et le rayon externe rₑₓₜ de la barrière de flux externe. Ces rayons interne et externe sont identiques pour le pôle magnétique primaire et pour le pôle magnétique secondaire. Cette conception permet de simplifier la fabrication et le nombre d'aimants permanents différents utilisés.

Toutefois, les rayons internes et externes des pôles magnétiques primaires peuvent être différents des rayons interne et externe des pôles magnétiques secondaires. Ainsi, asymétrie plus importante peut être obtenue, et un degré de liberté supplémentaire est disponible pour réduire les ondulations de couple et maximiser le couple.

Les figures 3 à 8 illustrent, schématiquement et de manière non limitative, différents modes de réalisation de l'invention, sur la base du rotor des figures 1 et 2. Ces figures sont des vues d'une section transversale perpendiculaire à l'axe du rotor. De plus, ces figures sont des vues partielles du rotor : elles représentent un quart du rotor correspondant à deux pôles magnétiques d'un rotor à quatre paires de pôles magnétiques. La différence entre ces modes de réalisation correspond à l'agencement des aimants permanents dans les pôles magnétiques. Pour ces figures, seule la disposition des aimants permanents est détaillée. Bien que les figures 3 à 8 soient représentées avec une asymétrie des pôles magnétiques, et avec des évidements d'allègement, ces modes de réalisation peuvent être mis en œuvre avec des pôles magnétiques identiques et/ou sans évidements d'allègement 8.

Pour le mode de réalisation de la figure 3, uniquement chaque évidement central 5 de la barrière de flux interne 2 est pourvu d'un aimant permanent 12, ici de section rectangulaire.

Pour le mode de réalisation de la figure 4, un aimant permanent 12 est agencé dans chaque évidement central 5 de la barrière de flux interne 2, et un aimant permanent 13 est agencé dans chaque évidement incliné 7 de la barrière de flux externe 3. Les aimants permanents 12 et 13 sont de section rectangulaire. De préférence, les aimants permanents 12 et 13 sont de dimensions identiques.

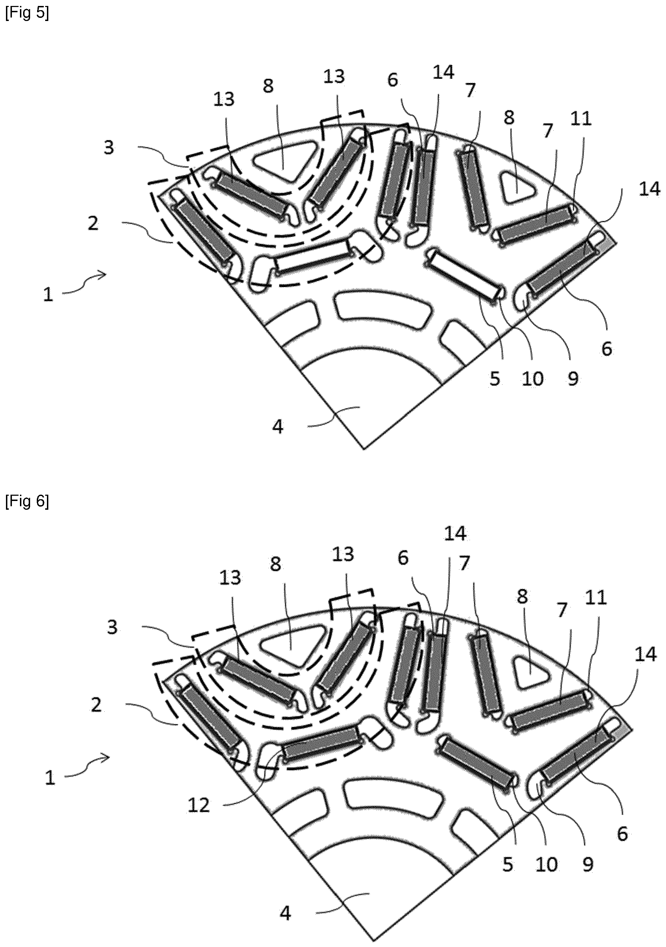

Pour le mode de réalisation de la figure 5, un aimant permanent 13 est agencé dans chaque évidement incliné 7 de la barrière de flux externe 3, et un aimant permanent 14 est agencé dans chaque évidement incliné 6 de la barrière de flux interne 2. Les aimants permanents 13 et 14 sont de section rectangulaire. De préférence, les aimants permanents 13 et 14 sont de dimensions identiques.

Pour le mode de réalisation de la figure 6, un aimant permanent 12 est agencé dans chaque évidement central 5 de la barrière de flux interne 2, un aimant permanent 13 est agencé dans chaque évidement incliné 7 de la barrière de flux externe 3, et un aimant permanent 14 est agencé dans chaque évidement incliné 6 de la barrière de flux interne 2. Les aimants permanents 12, 13 et 14 sont de section rectangulaire. De préférence, les aimants permanents 12, 13 et 14 sont de dimensions identiques.

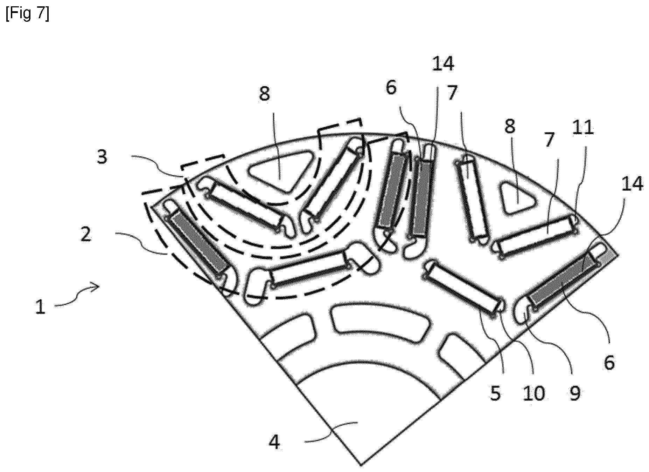

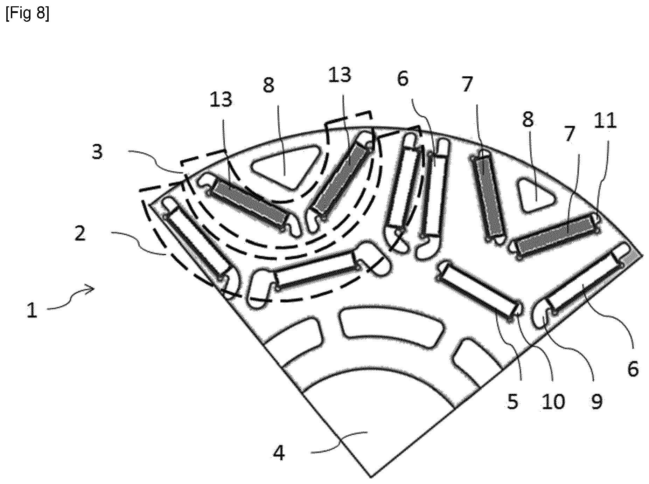

Pour le mode de réalisation de la figure 7, un aimant permanent 14 est agencé dans chaque évidement incliné 6 de la barrière de flux interne 2. Les aimants permanents 14 sont de section rectangulaire. De préférence, les aimants permanents 14 sont de dimensions identiques. Pour le mode de réalisation de la figure 8, un aimant permanent 13 est agencé dans chaque évidement 7 de la barrière de flux externe 3. Les aimants permanents 13 sont de section rectangulaire. De préférence, les aimants permanents 13 sont de dimensions identiques.

L'invention est définie par les revendications annexées.

## Revendications

1. Rotor pour machine électrique, ledit rotor (1) comprenant un corps de rotor formé par un empilage de tôles, de préférence placé sur un arbre de rotor (4), et une pluralité de paires de pôles magnétiques (16, 16'), chaque pôle magnétique (16, 16') est composé de deux barrières de flux constituant chaque pôle magnétique, dont une barrière de flux externe (3) et une barrière de flux interne (2), et d'au moins un aimant permanent positionné dans un évidement axial d'une desdites deux barrières de flux (2, 3), dans lequel pour chaque pôle magnétique (16, 16'), ladite barrière de flux interne (2) est constituée de deux évidements inclinés (6) positionnés et espacés de part et d'autre d'un évidement central (5), ledit évidement central (5) s'étendant dans une direction circonférentielle, perpendiculairement à un rayon (R) dudit rotor, et lesdits évidements inclinés (6) de ladite barrière de flux interne (2) étant espacés de la périphérie du rotor (1), et dans lequel, pour chaque pôle magnétique (16, 16'), ladite barrière de flux externe (3) est constituée de deux évidements inclinés (7) et espacés par rapport audit rayon perpendiculaire (R) audit évidement central (5) de ladite barrière de flux interne (2), lesdits évidements inclinés (6) de ladite barrière de flux externe étant espacés de la périphérie du rotor (1), en ce que un aimant permanent (13), de préférence un unique aimant permanent, est positionné dans chaque évidement incliné (7) de ladite barrière de flux externe (3), **caractérisé en ce que** l'angle d'ouverture (α) des évidements inclinés (5) de ladite barrière de flux interne (2) est strictement inférieur à l'angle d'ouverture (β) des évidements inclinés (7) de ladite barrière de flux externe (3), l'angle d'ouverture desdits évidements inclinés desdites barrières de flux interne (2) ou externe (3) étant défini par l'angle formé entre deux droites, chaque droite passant par le milieu de deux côtés d'un évidement incliné (6, 7), lesdits deux côtés de l'évidement incliné étant celui faisant face à la périphérie dudit rotor (1) et celui faisant face au centre dudit rotor (C).

2. Rotor selon la revendication 1, dans lequel, pour chaque pôle magnétique (16, 16'), un aimant permanent (12), de préférence un unique aimant permanent, est positionné dans ledit évidement central (5) de ladite barrière de flux interne (2).

3. Rotor selon l'une des revendications précédentes, dans lequel, pour chaque pôle magnétique (16, 16'), un aimant permanent (14), de préférence un unique aimant permanent, est positionné dans chaque évidement incliné (6) de ladite barrière de flux interne (2).

4. Rotor selon l'une des revendications précédentes, dans lequel, pour chaque pôle magnétique (16, 16'), lesdits évidements inclinés (6, 7) desdites barrières de flux interne (2) et/ou externe (3) sont symétriques par rapport audit rayon perpendiculaire (R) audit évidement central (5) de ladite barrière de flux interne (2).

5. Rotor selon l'une des revendications précédentes, dans lequel deux pôles magnétiques (16, 16') consécutifs sont asymétriques.

6. Rotor selon l'une des revendications précédentes, dans lequel l'angle d'ouverture (α) des évidements inclinés (6) de ladite barrière de flux interne (2) est aigu.

7. Rotor selon l'une des revendications précédentes, dans lequel l'angle d'ouverture (β) des évidements inclinés (7) de ladite barrière de flux externe (3) est obtus ou droit.

8. Rotor selon l'une des revendications précédentes, dans lequel chaque pôle magnétique (16, 16') comporte une pluralité d'aimants permanents (12, 13, 14) disposés dans lesdits évidements (5, 6, 7) desdites barrières de flux, lesdits aimants permanents (12, 13, 14) étant de dimensions identiques.

9. Rotor selon l'une des revendications précédentes, dans lequel ledit rotor comporte un évidement d'allègement (8) entre ladite barrière de flux externe (3) et la périphérie dudit corps de rotor (1), de préférence ledit évidement d'allègement (8) a une forme sensiblement triangulaire, de manière préférée deux côtés de ladite forme triangulaire sont sensiblement parallèles auxdits évidements inclinés (7) de ladite barrière de flux externe (3).

10. Rotor selon l'une des revendications précédentes, dans lequel ledit nombre de paires de pôles magnétiques (16, 16') est compris entre 2 et 9, de préférence entre 3 et 6, et vaut de manière préférée 4.

11. Rotor selon l'une des revendications précédentes, dans lequel ledit au moins un aimant permanent (12, 13, 14) a une section rectangulaire.

12. Machine électrique **caractérisée en ce qu'**elle comprend un stator et un rotor (1) selon l'une des revendications précédentes, ledit rotor étant logé à l'intérieur dudit stator.

13. Machine électrique selon la revendication 12, dans lequel ledit stator comprend une pluralité d'encoches radiales disposées circonférentiellement le long dudit stator.

14. Machine électrique selon l'une des revendications 12 à 13, dans lequel ladite machine électrique est du type machine électrique synchro-réluctante assistée d'aimants permanents.

## Patentansprüche

1. Rotor für eine elektrische Maschine, wobei der Rotor (1) einen von einem Blechpaket gebildeten Rotorkörper, der vorzugsweise auf einer Rotorwelle (4) angeordnet ist, und mehrere Paare von Magnetpolen (16, 16') umfasst, wobei jeder Magnetpol (16, 16') aus zwei Flusssperren, die den jeweiligen Magnetpol bilden, nämlich einer äußeren Flusssperre (3) und einer inneren Flusssperre (2), und aus mindestens einem Permanentmagneten, der in einer axialen Aussparung einer der zwei Flusssperren (2, 3) positioniert ist, besteht, wobei für jeden Magnetpol (16, 16') die innere Flusssperre (2) aus zwei geneigten Aussparungen (6) besteht, die beiderseits einer mittleren Aussparung (5) positioniert und beabstandet sind, wobei sich die mittlere Aussparung (5) in einer Umfangsrichtung, senkrecht zu einem Radius (R) des Rotors, erstreckt, und die geneigten Aussparungen (6) der inneren Flusssperre (2) vom Umfang des Rotors (1) beabstandet sind, und wobei für jeden Magnetpol (16, 16') die äußere Flusssperre (3) aus zwei Aussparungen (7) besteht, die geneigt und beabstandet in Bezug auf den zu der mittleren Aussparung (5) der inneren Flusssperre (2) senkrechten Radius (R) sind, wobei die geneigten Aussparungen (6) der äußeren Flusssperre vom Umfang des Rotors (1) beabstandet sind, wobei ein Permanentmagnet (13), vorzugsweise ein einziger Permanentmagnet, in jeder geneigten Aussparung (7) der äußeren Flusssperre (3) positioniert ist, **dadurch gekennzeichnet, dass** der Öffnungswinkel (α) der geneigten Aussparungen (5) der inneren Flusssperre (2) streng kleiner als der Öffnungswinkel (β) der geneigten Aussparungen (7) der äußeren Flusssperre (3) ist, wobei der Öffnungswinkel der geneigten Aussparungen der inneren (2) oder äußeren (3) Flusssperre durch den Winkel definiert ist, der zwischen zwei Geraden gebildet wird, wobei jede Gerade durch die Mitte von zwei Seiten einer geneigten Aussparung (6, 7) verläuft, wobei die zwei Seiten der geneigten Aussparung diejenige, die dem Umfang des Rotors (1) zugewandt ist, und diejenige, die dem Mittelpunkt des Rotors (C) zugewandt ist, sind.

2. Rotor nach Anspruch 1, wobei für jeden Magnetpol (16, 16') ein Permanentmagnet (12), vorzugsweise ein einziger Permanentmagnet, in der mittleren Aussparung (5) der inneren Flusssperre (2) positioniert ist.

3. Rotor nach einem der vorhergehenden Ansprüche, wobei für jeden Magnetpol (16, 16') ein Permanentmagnet (14), vorzugsweise ein einziger Permanentmagnet, in jeder geneigten Aussparung (6) der inneren Flusssperre (2) positioniert ist.

4. Rotor nach einem der vorhergehenden Ansprüche, wobei für jeden Magnetpol (16, 16') die geneigten Aussparungen (6, 7) der inneren (2) und/oder äußeren (3) Flusssperre symmetrisch in Bezug auf den zur mittleren Aussparung (5) der inneren Flusssperre (2) senkrechten Radius (R) sind.

5. Rotor nach einem der vorhergehenden Ansprüche, wobei zwei aufeinander folgende Magnetpole (16, 16') asymmetrisch sind.

6. Rotor nach einem der vorhergehenden Ansprüche, wobei der Öffnungswinkel (α) der geneigten Aussparungen (6) der inneren Flusssperre (2) spitz ist.

7. Rotor nach einem der vorhergehenden Ansprüche, wobei der Öffnungswinkel (β) der geneigten Aussparungen (7) der äußeren Flusssperre (3) stumpf oder ein rechter Winkel ist.

8. Rotor nach einem der vorhergehenden Ansprüche, wobei jeder Magnetpol (16, 16') mehrere Permanentmagnete (12, 13, 14) aufweist, die in den Aussparungen (5, 6, 7) der Flusssperren angeordnet sind, wobei die Permanentmagnete (12, 13, 14) identische Abmessungen aufweisen.

9. Rotor nach einem der vorhergehenden Ansprüche, wobei der Rotor eine Entlastungsaussparung (8) zwischen der äußeren Flusssperre (3) und dem Umfang des Rotorkörpers (1) aufweist, die Entlastungsaussparung (8) vorzugsweise eine im Wesentlichen dreieckige Form hat und bevorzugt zwei Seiten dieser dreieckigen Form im Wesentlichen parallel zu den geneigten Aussparungen (7) der äußeren Flusssperre (3) sind.

10. Rotor nach einem der vorhergehenden Ansprüche, wobei die Anzahl der Paare von Magnetpolen (16, 16') zwischen 2 und 9 liegt, vorzugsweise zwischen 3 und 6, und bevorzugt 4 beträgt.

11. Rotor nach einem der vorhergehenden Ansprüche, wobei der mindestens eine Permanentmagnet (12, 13, 14) einen rechteckigen Querschnitt hat.

12. Elektrische Maschine, **dadurch gekennzeichnet, dass** sie einen Stator und einen Rotor (1) nach einem der vorangehenden Ansprüche umfasst, wobei der Rotor innerhalb des Stators angeordnet ist.

13. Elektrische Maschine nach Anspruch 12, wobei der Stator mehrere Radialnuten umfasst, die in Umfangsrichtung entlang des Stators angeordnet sind.

14. Elektrische Maschine nach einem der Ansprüche 12 bis 13, wobei die elektrische Maschine vom Typ einer elektrischen Synchron-Reluktanzmaschine mit Permanentmagnetunterstützung ist.

## Claims

1. Rotor for an electric machine, said rotor (1) comprising a rotor body formed by a stack of laminations, preferably placed on a rotor shaft (4), and a plurality of pairs of magnetic poles (16, 16'), each magnetic pole (16, 16') being made up of two flux barriers constituting each magnetic pole, including one external flux barrier (3) and one internal flux barrier (2), and of at least one permanent magnet positioned in an axial recess of one of said two flux barriers (2, 3), wherein, for each magnetic pole (16, 16'), said internal flux barrier (2) is constituted of two inclined recesses (6) positioned and spaced on either side of a central recess (5), said central recess (5) extending in a circumferential direction, perpendicular to a radius (R) of said rotor, and said inclined recesses (6) of said internal flux barrier (2) being spaced from the periphery of the rotor (1), and wherein, for each magnetic pole (16, 16'), said external flux barrier (3) is constituted of two inclined recesses (7) that are spaced with respect to said radius (R) perpendicular to said central recess (5) of said internal flux barrier (2), said inclined recesses (6) of said external flux barrier being spaced from the periphery of the rotor (1), in that a permanent magnet (13), preferably a single permanent magnet, is positioned in each inclined recess (7) of said external flux barrier (3), **characterized in that** the opening angle (α) of the inclined recesses (5) of said internal flux barrier (2) is strictly smaller than the opening angle (β) of the inclined recesses (7) of said external flux barrier (3), the opening angle of said inclined recesses of said internal flux barrier (2) or external flux barrier (3) being defined by the angle formed between two straight lines, each straight line passing through the middle of two sides of an inclined recess (6, 7), said two sides of the inclined recess being the one facing the periphery of said rotor (1) and the one facing the centre of said rotor (C).

2. Rotor according to Claim 1, wherein, for each magnetic pole (16, 16'), a permanent magnet (12), preferably a single permanent magnet, is positioned in said central recess (5) of said internal flux barrier (2).

3. Rotor according to either of the preceding claims, wherein, for each magnetic pole (16, 16'), a permanent magnet (14), preferably a single permanent magnet, is positioned in each inclined recess (6) of said internal flux barrier (2).

4. Rotor according to one of the preceding claims, wherein, for each magnetic pole (16, 16'), said inclined recesses (6, 7) of said internal flux barrier (2) and/or external flux barrier (3) are symmetrical with respect to said radius (R) perpendicular to said central recess (5) of said internal flux barrier (2).

5. Rotor according to one of the preceding claims, wherein two consecutive magnetic poles (16, 16') are asymmetrical.

6. Rotor according to one of the preceding claims, wherein the opening angle (α) of the inclined recesses (6) of said internal flux barrier (2) is acute.

7. Rotor according to one of the preceding claims, wherein the opening angle (β) of the inclined recesses (7) of said external flux barrier (3) is obtuse or a right angle.

8. Rotor according to one of the preceding claims, wherein each magnetic pole (16, 16') has a plurality of permanent magnets (12, 13, 14) disposed in said recesses (5, 6, 7) of said flux barriers, said permanent magnets (12, 13, 14) being of identical dimensions.

9. Rotor according to one of the preceding claims, wherein said rotor has a lightening recess (8) between said external flux barrier (3) and the periphery of said rotor (1) body, preferably said lightening recess (8) has a substantially triangular shape, preferably two sides of said triangular shape are substantially parallel to said inclined recesses (7) of said external flux barrier (3).

10. Rotor according to one of the preceding claims, wherein said number of pairs of magnetic poles (16, 16') is between 2 and 9, preferably between 3 and 6, and is preferably equal to 4.

11. Rotor according to one of the preceding claims, wherein said at least one permanent magnet (12, 13, 14) has a rectangular section.

12. Electric machine, **characterized in that** it comprises a stator and a rotor (1) according to one of the preceding claims, said rotor being housed inside said stator.

13. Electric machine according to Claim 12, wherein said stator comprises a plurality of radial slots disposed circumferentially along said stator.

14. Electric machine according to either of Claims 12 and 13, wherein said electric machine is a permanentmagnet-assisted synchronous reluctance electric machine.
